# EUROPÄISCHE PATENTSCHRIFT

(11) **EP 0 602 578 B1**
(45) Veröffentlichungstag und Bekanntmachung des Hinweises auf die Patenterteilung: **27.03.1996**
(21) Anmeldenummer: 93120070.3
(22) Anmeldetag: 13.12.1993
(51) Int. Cl.: H01M 10/10

(54) **Wartungsfreier Bleiakkumulator mit hoher Kapazität**
High capacity maintenance-free lead accumulator
Accumulateur au plomb sans entretien à capacité élevée

(30) Priorität: 17.12.1992 DE 4242661
(43) Veröffentlichungstag der Anmeldung: 22.06.1994
(73) Patentinhaber: ACCUMULATORENFABRIK SONNENSCHEIN GMBH, D-63654 Büdingen (DE)
(72) Erfinder: Holland, Gunther, D-63654 Büdingen-Düdelsheim (DE); Kugler, Wolfgang, D-63683 Ortenberg 9 (DE)
(74) Vertreter: Baumann, Eduard, Dipl.-Phys.

(56) Entgegenhaltungen:
- DE-B- 1 011 020
- FR-A- 1 280 180
- GB-A- 561 056
- GB-A- 787 872
- US-A- 4 652 505
- PATENT ABSTRACTS OF JAPAN vol. 6, no. 21 (E-93)(899) 6. Februar 1982 & JP-A-56 141 179 (MATSUSHITA DENKI SANGYO K.K.)
- PATENT ABSTRACTS OF JAPAN vol. 6, no. 21 (E-93)(899) 6. Februar 1982 & JP-A-56 1
- PATENT ABSTRACTS OF JAPAN, Band 6, Nr. 21 (E-93)(899), 06 Februar 1982

## Beschreibung

Die Erfindung bezieht sich auf einen gasdichten, wartungsfreien Blei- Akkumulator hoher Kapazität gemäß dem Oberbegriff des Anspruches 1.

Ein gasdichter Abschluß und eine Wartungsfreiheit wird durch die Benutzung eines schwefelsäurehaltigen Elektrolyten in Form eines thixotropen Gels ermöglicht, bei dem eine Verdunstung von Flüssigkeit oder eine Gasung im wesentlichen ausgeschlossen ist. Unter derartig ausgestatteten Akkumulatoren hoher Kapazität sollen solche verstanden werden, bei denen bedingt durch die größere bzw. höhere Bauart in Abhängigkeit vom Ladezustand derartige Mengen an freiem flüssigen oder gasförmigen Elektrolyt aus dem Gel bzw. den Aktivmassen oder den Separatoren austreten, daß sie nicht mehr vernachlässigbar sind. Ein größeres Problem entsteht insbesondere bei liegenden Einbau eines derartigen Akkumulators, der bei größeren Anlagen einer Vielzahl neben- und übereinander angeordneter Akkumulatoren in einem Gestell wegen der einfacheren Anordnung, Ladung und Bedienung und einer platzsparenderen Unterbringung bevorzugt wird. In diesem Falle kann nämlich die freie Schwefelsäure das aus Sicherheitsgründen stete vorhandene Überdruckventil erreichen und nach außen austreten. Die an sich nur für eine stehende Anordnung geltende Bezeichnung "oben" wird auch für die liegende Anordnung beibehalten.

Bei einer Entladung nimmt das Volumen des Elektrolyten ab und das Volumen der Aktivmassen der Elektrodenplatten zu, bei der Aufladung ist es umgekehrt. In diesem Falle entsteht noch zusätzlich in den Poren der Elektrodenplatten Gas, welches dort vorhandenen Elektrolyt verdrängt. Zum Teil wird das Elektrolyt-Volumen reversibel durch die Gel- Struktur aufgenommen. Als Folge tritt beim Laden eine nicht vernachlässigbare Menge an flüssigen Elektrolyt oberhalb des Plattensatzes auf.

Aus diesem Grunde wurde in der DE 3727763 C1 für eine liegende Anordnung des Akkumulators ein Trennwinkel vorgesehen, der den Raum zwischen Elektrodenplatten und Deckel in einem unteren Bereich, der die Einfüllöffnung mit erfaßt, absperrt. Dieser Raum ist vorzugsweise durch eine abdichtende eingespritzte Schaumstoffmasse ausgefüllt. Hierbei bezieht sich der Ausdruck unterer Bereich auf die liegende Anordnung. Der freie Schwefelsäure-Elektrolyt kann dann lediglich im verbleibenden oberen Freiraum zwischen Elektrodenplatten und Gehäusedeckel auftreten. Das dennoch erforderliche Überdruckventil ist dann an einer Seitenwandung des Akkumulators so angebracht, daß es in der Liegestellung nach oben ragt.

Die dort beschriebene Anordnung hat den Nachteil, daß ein derartiger Akkumulator ausschließlich in liegender Stellung zu betreiben ist, daß auch eine ganz bestimmte liegende Stellung gewählt werden muß, bei der das Überdruckventil oben angeordnet ist, daß der oben noch verfügbare freie Raum verhältnismäßig gering ist, so daß es relativ häufig zu Überdruckreaktionen, d.h. dem Entleeren über das Überdruckventil, kommen kann, was die Einsatzfähigkeit beeinträchtigen könnte. Eine Verbindung einer derartigen liegenden Batterie mit anderen stehenden Batterien in einem gemeinsamen Gestell ist umständlich, aufwendig und erfordert mehr Platz. Ist nur eine einzige Liegestellung möglich, bei der z.B. alle positiven Anschlußpole oben angeordnet sind, so ist eine längere Diagonalverbindung mit dem Minuspol der angrenzenden Batterie erforderlich. Außerdem ist es unerwünscht, für eine liegende Anordnung zwei unterschiedliche Batterietypen mit den höheren Aufwendungen in Herstellung, Lagerhaltung und Vertrieb vorzusehen, wobei bei einem ersten Typ der Minuspol, bei einem zweiten Typ der Pluspol in Liegestellung oben angeordnet ist.

In der DE 4032990 A1 wird vorgeschlagen, den Gasauslaß von einer Seite unter dem Deckel an das zentral eingebaute Ventil zu leiten, damit der Elektrolyt im liegenden Zustand des Akkumulators über die Mitte der Zelle hinaus ansteigen kann. Die Akkumulatoren können nur nach einer ganz bestimmten Seite umgelegt werden, was nachteilig ist und zu Installationsfehlern führen kann.

Die JP- OS 87-157673 beschreibt einen Bleiakkumulator, in welchem ein Separator mit Hauptbestandteil Glasfaser eingesetzt ist. Dieser Separator weist Durchschnittsöffnungen zwischen 30 und 50 µm auf, Wassermenge und Druck werden zum durchschnittlichen Öffnungsdurchmesser in Bezug gesetzt. Auf diese Weise soll die Absorptionsfähigkeit für Flüssigkeiten in der negativen Elektrodenplatte höher werden als beim Separator. Dadurch soll die Elektrolytverteilung im Akkumulator gleichförmiger werden, hierdurch soll die Speicherleistung verbessert und der Kapazitätsabfall unterdrückt werden. Diese Anordnung ist nur zum Beeinflussen kleiner Plattenflächen geeignet. Von der Problematik einer liegenden Anordnung bei Großbatterien zwischen etwa 200 und 1200 Ah ist dieser Druckschrift nichts zu entnehmen.

Die JP- OS 87-115658 schlägt neben zickzack-förmigen Elektrodengittern dicke Separatoren aus hydrophilem Kunststoff oder Glasfaser mit einer durchschnittlichen Dicke von 1 µm oder darüber beim größten Teil der Separatorbereiche vor, wogegen entsprechend dünnere Glasfasern in übrigen Bereich vorgesehen sind. Zusätzlich werden Elektrolythalteteile beispielsweise aus hydrophilem porösen Kunststoff vorgeschlagen, welche feines Siliziumpulver mit einer höheren Elektrolythaltefähigkeit als ein Separator aufweisen. Dadurch soll die Verwendung sehr teurer Separatoren trotz gleichmäßiger Elektrolytverteilung vermieden werden. Auch die JP- OS 87- 115659 schlägt die Kombination von dicken Separatoren aus hydrophilem Kunststoff oder Glasfasern mit dünneren Separatoren für andere Gruppen von Elektrodenplatten vor, darüber hinaus einen zusätzlichen Elektrolythaltekörper aus hydrophilem porösen Kunststoff mit feinem Siliziumpulver und höherer Haltekapazität im Vergleich zum Separator. Auch hier ist von der Problematik von liegenden Akkumulatoren nicht die Rede.

Der Erfindung liegt das Problem zugrunde, einen gasdichten, wartungsfreien Blei- Akkumulator hoher Kapazität gemäß dem Oberbegriff des Anspruches 1 so auszugestalten, daß sowohl ein liegender als auch ein aufrechter Betrieb unter Vermeidung von zwei unterschiedlichen Akkumulatorausführungen möglich ist, wobei der positive oder der negative Pol oben liegen kann.

Das Problem wird erfindungsgemäß durch die Merkmale des Kennzeichens des Anspruches 1 gelöst. Weitere Ausgestaltungen der Erfindung sind in den Unteransprüchen unter Schutz gestellt.

Die Erfindung sieht in Freiräumen des Akkumulators Vliesschichten vor, welche freien, insbesondere flüssigen, Elektrolyt bei bestimmten Ladezuständen absorbieren und bei anderen Ladezuständen wieder an den gelförmigen Elektrolyten bzw. die Aktivmassen der Elektrodenplatten abgeben.

Als Vlies wird hierbei elastisches hoch poröses Material eingesetzt, vorzugsweise mit einer Porosität zwischen 90 und 99%. Zur Anpassung an die Bedürfnisse des Akkumulators wird dieses Vlies vorzugsweise in bestimmtem Umfang zusammengepreßt.

Das Vliesmaterial wird zweckmäßigerweise an den seitlichen Kanten, am Boden und oberhalb der Kanten bzw. oberhalb der Polbrücken der Elektrodenplatten angeordnet. Als Material kann neben Glasfaser insbesondere Polyester und Polyäthylen eingesetzt werden.

In der Praxis sind folgende Bereiche eines wartungsfreien Akkumulators für die Bindung von Elektrolyt verantwortlich:
a) Die Poren in den positiven und negativen Elektrodenplatten, von welchen die zyklische Entstehung und Bindung des Elektrolyten, d.h. während des Ladens und Entladens, ausgeht.
b) Eine feinporige Gelstruktur zwischen Elektrodenplatten und Separatoren. Sie hält den Elektrolyten sehr fest. Darüber hinaus kann durch vorhandene Risse innerhalb der Gelstruktur Elektrolyt in weitere Porensysteme fließen; durch diese Risse erfolgt auch der Transport von Gasblasen.
c) Die Poren des Separators; in diese Poren können die Gelpartikel kaum eindringen, der Elektrolyt wird dadurch in den Poren des Separators sehr fest gehalten.
d) Die Poren im erfindungsgemäß vorgesehenen Vlies zwischen Seitenkanten und Seitenwänden sowie gegebenenfalls am Boden des Gehäuses sind meistens weitgehend gefüllt.
e) Vorhandene überschüssige Elektrolyt Flüssigkeit fließt in die Poren des oberhalb der Elektrodenplatten angeordneten leichter zusammengedrückten Vlieses. Diese nehmen hauptsächlich das wechselnde freie Elektrolytvolumen des Akkumulators auf. Hierbei werden zunächst die unteren Bereiche gefüllt, abhängig davon, ob die Batterie stehend oder liegend angeordnet ist. Entsprechend der Steigfähigkeit innerhalb der Kapillaren des Vlieses werden dann allmählich auch die oberen Vliesbereiche gefüllt, so daß noch kaum freie Elektrolytflüssigkeit im Freiraum in der Nähe des Überdruckventiles übrigbleibt.

Ausführungsbeispiele der Erfindung sind in der Zeichnung dargestellt. Es zeigt:
- Fig. 1: einen liegenden Akkumulator im Längsschnitt mit oben und unten angeordneten Vliesschichten,
- Fig. 2: einen Querschnitt durch den in Fig. 1 gezeigten Akkumulator von vorne,
- Fig. 3: ein anderes Ausführungsbeispiel eines liegenden Akkumulators mit mehreren im Freiraum zwischen Polbrücken und Gehäusedeckel angeordneten Vliesschichten im Längsschnitt,
- Fig. 4: das in Fig. 3 gezeigte Ausführungsbeispiel als Querschnitt von vorne.

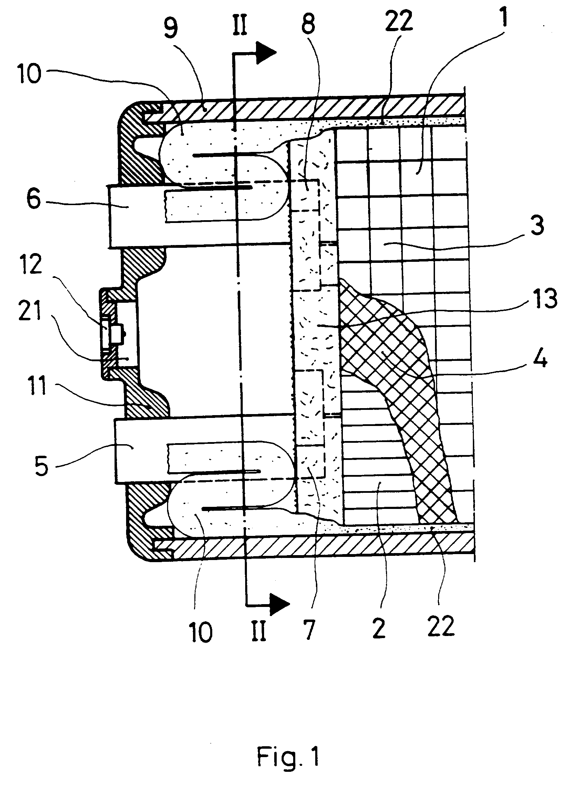

In der Zeichnung sind gleiche Teile mit gleichen Bezugszeichen versehen. In Fig. 1 ist das Akkumulatorgehäuse mit 9, der Gehäusedeckel mit 11, die Einfüllöffnung mit 21 bezeichnet, auf welcher das Überdruckventil 12 aufsitzt. Die positiven Elektrodenplatten sind mit 2, darüber die negativen Elektrodenplatten sind mit 3 bezeichnet, die dazwischenliegenden Separatoren sind mit 4 bezeichnet, der ganze Plattensatz ist mit 1 bezeichnet. Die einzelnen positiven Elektrodenplatten 2 sind über positive Polbrücken 7 mit einem nach außen durch den Gehäusedeckel 11 hindurchgeführten positiven Anschlußpol 5 verbunden. Desgleichen sind die einzelnen negativen Elektrodenplatten 3 über negative Polbrücken 8 mit dem negativen nach außen geführten Anschlußpol 6 verbunden. Mit 13 wird der Schwefelsäure enthaltende Elektrolyt in Form eines thixotropen Gels bezeichnet, der bis über die Polbrücken 7, 8 aufgefüllt ist, an den sich zum Gehäusedeckel 11 hin ein verhältnismäßig breiter Freiraum, auch als Gasraum bezeichnet, befindet.

Separatoren 4, positive Eletrodenplatten 2 und negative Elektrodenplatten 3 sind im Beispiel von Fig. 1 senkrecht und hintereinander angeordnet, was durch entsprechende Teilschnitte schematisch dargestellt ist.

Erfindungsgemäß ist an den schmalen Freiräumen zwischen den in Fig. 1 oben und unten angeordneten Kanten der Elektrodenplatten bzw. Separatoren sowie gegebenenfalls am - nicht dargestellten - Boden eine verhältnismäßig schmale Vliesschicht 22 vorgesehen, die sich oberhalb bzw. links von den Elektrodenplatten verbreitert und sich in einem entsprechenden oberen und unteren Bereich 10 bis zum Gehäusedeckel 11 erstreckt, wo sie zweimal bis zum jeweiligen Anschlußpol 5, 6 gefaltet ist. Die Separatoren 4 sind vorzugsweise aus mikroporösem Polyvinylchlorid mit Abstandsrippen auf beiden Seiten aufgebaut. An den Seitenkanten der Separatoren und Elektrodenplatten wird das Vlies 22 auf ca. 50% bis 80% zusammengepreßt, während der oberhalb der Elektrodenplatten angeordnete Vliesbereich 10 nur leicht gegen die jeweiligen Anschlußpole 5, 6 gepreßt wird.

Anschließend wird der Gehäusedeckel 11 aufgesetzt, abdichtend mit dem Gehäuse 9 verbunden und auch die Anschlußpole 5, 6 abgedichtet. Danach wird thixotropes Elektrolytgel 13, wie es beispielsweise aus der DE- PS 1194015 bekannt ist, bis auf das Niveau der Polbrücken 7, 8 aufgefüllt. Anschließend wird die Einfüllöffnung 21 für den Elektrolyt durch ein passendes Überdruckventil 12 verschlossen, das bei einem bestimmten Druck nach außen öffnet.

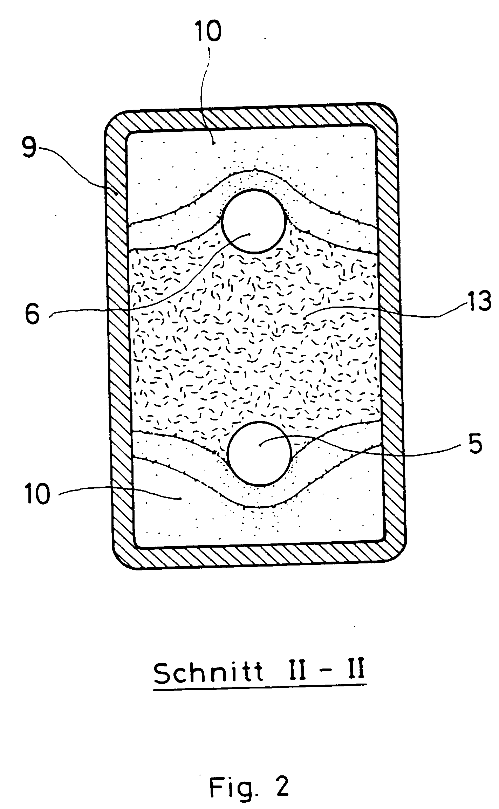

Fig. 2 zeigt einen Querschnitt durch den in Fig. 1 dargestellten Akkumulator entlang der Linie II-II von Fig. 1, wobei gleiche Teile mit gleichen Bezugszeichen versehen sind.

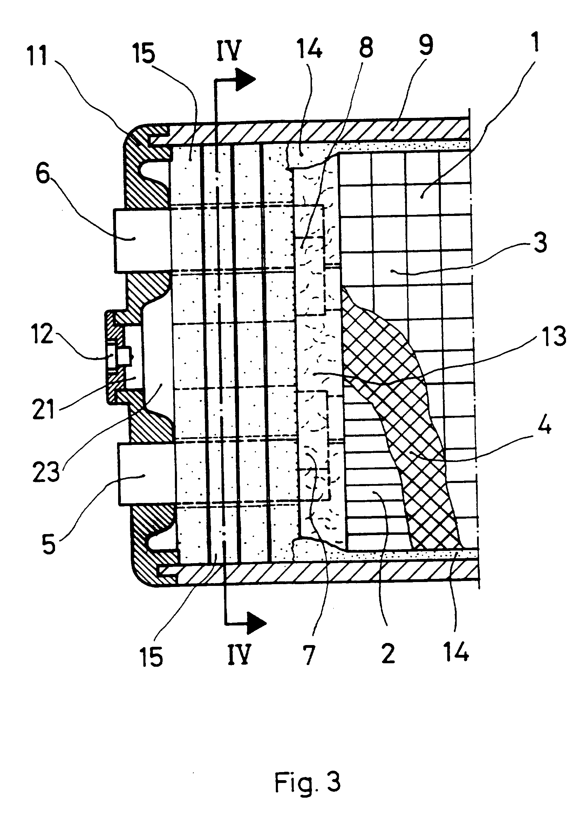

Fig. 3 zeigt ein anderes Ausführungsbeispiel für einen ebenfalls liegenden Akkumulator. Der einzige Unterschied zum vorher beschriebenen Beispiel besteht hier darin, daß die Vliesschicht 14 an den zwei gegenüber liegenden seitlichen Kantenbereichen des Plattensatzes etwas oberhalb der Polverbinder 7, 8 bzw. oberhalb der Oberfläche des verfestigten thixotropen Gels endet. Der ganze größere Freiraum oberhalb des Gels bzw. der Polverbinder 7, 8 bis zum Gehäusedeckel 11 hin ist im wesentlichen von einer oder vorzugsweise von mehreren Vliesschichten 15 ausgefüllt, die eine sehr hohe Menge an überschüssigem flüssigem Elektrolyt zeitweise aufnehmen können. Das gesamte Plattenpaket ist im übrigen mit 1 bezeichnet. Die einzelnen Vliesschichten haben neben Durchtrittsöffnungen für die beiden Anschlußpole 5, 6 auch noch eine weitere, bis zur Geloberfläche durchgehende Öffnung 23 im Bereich der Einfüllöffnung 21, auf welche das Überdruckventil 12 abdichtend aufgesetzt ist. Diese Öffnung kann sich kegelförmig in Richtung zur Geloberfläche verjüngen oder verbreitern, je nach Einsatzbedingungen. Bei dieser Ausführungsform ist es möglich, für die Abdeckung der seitlichen Kanten ein anderes, gegebenenfalls besser geeignetes Material einzusetzen. Im übrigen kann vorteilhafterweise auch zwischen Boden und Bodenkanten des Plattensatzes ein entsprechendes poröses Vlies eingesetzt werden, um auch dort eine Absorptionsmöglichkeit für überschüssigen flüssigen Elektrolyt zu schaffen.

Wählt man für das Vlies beispielsweise im unbelasteten Zustand einen durchschnittlichen Porendurchmesser von 0,1 mm, so kann der Elektrolyt bei vollständiger Benetzung des Vlieses aufgrund des Kapillareffektes etwa 200 mm hoch steigen. Dies entspricht etwa der erforderlichen Saughöhe bei liegender Zelle. Wird das Vlies auf ein Fünftel seiner Dicke bzw. seines Volumens zusammengedrückt, so wird die Steighöhe entsprechend größer. Überraschend zeigte sich aber auch die Eignung von Kunststoffvliesen aus Polyester und Polyäthylen, obwohl diese bekanntlich sehr schlecht benetzbare Materialien sind. Durch eine entsprechende Vorbehandlung, die zu einem Glanzeffekt dieser Fasern führt und unter dem Ausdruck Avivage bekannt ist, erhält man überraschenderweise eine ausreichende Anfangs- Benetzbarkeit; durch den Angriff der Schwefelsäure sowie durch die elektrochemische Oxidationswirkung bei der Ladung wird allmählich die Oberfläche der Fasern noch besser benetzbar, ohne daß hierdurch die Beständigkeit derselben merklich beeinträchtigt wird.

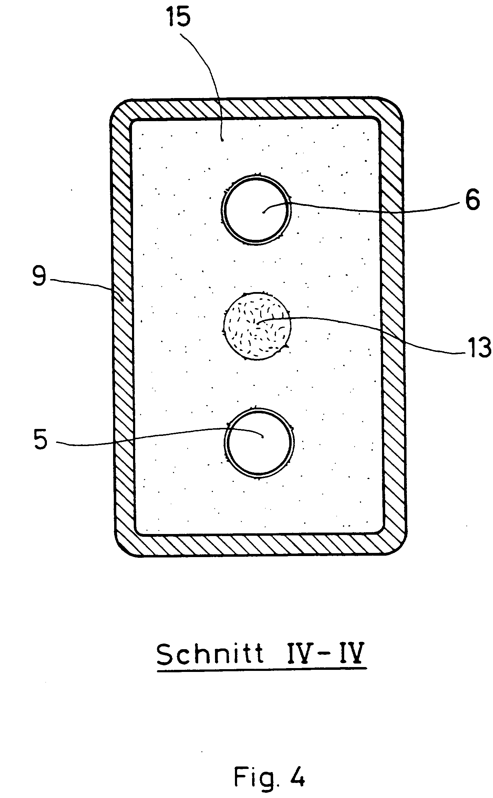

Fig. 4 zeigt einen Querschnitt durch den in Fig. 3 gezeigten Akkumulator entlang der Linie IV-IV, wobei gleiche Teile mit gleichen Bezugszeichen versehen sind.

## Patentansprüche

1. Gas dichter, wartungsfreier Blei- Akkumulator hoher Kapazität mit durch Separatoren (4) getrennten, die Aktivmassen enthaltenden positiven (2) und negativen Elektrodenplatten (3), mit einem größeren oberen ersten Freiraum zwischen Elektrodenplatten (2, 3) und Gehäusedeckel (11), einem seitlichen zweiten Freiraum zwischen den Seitenkanten der Elektrodenplatten und den Seitenwänden sowie einem unteren dritten Freiraum zwischen den Elektrodenplatten und dem Boden des Gehäuses (9), jeweils bezogen auf eine stehende Anordnung des Akkumulators, mit einer Einfüllöffnung (21) und einem Überdruckventil (12), wobei die über Polbrücken (7, 8) miteinander verbundenen positiven (2) bzw. negativen Elektrodenplatten (3) in einem positiven (5) bzw. einem negativen Anschlußpol (6) durch den Gehäusedeckel (11) hindurch abgedichtet nach außen geführt sind, wobei als Elektrolyt ein thixotropes Gel, in welchem Schwefelsäure gebunden ist, bis über die Polbrücken (7, 8) hinaus eingefüllt ist, und wobei Auffangeinrichtungen für freien flüssigen und gasförmigen Elektrolyten bei liegender Anordnung des Akkumulators vorgesehen sind,
dadurch gekennzeichnet, daß als Auffangeinrichtungen wenigstens teilweise im oberen ersten oder im seitlichen zweiten der drei Freiräume derartiges hochporöses Vlies (10, 22; 15, 14) aus Glas-, Mineral- oder Kunststoff- Fasern angeordnet ist, daß es die Menge des zeitweise in Abhängigkeit vom Ladezustand des Akkumulators vorhandenen freien flüssigen und gegebenenfalls gasförmigen Elektrolyten speichern und bei verändertem Ladezustand wieder abgeben kann, ohne daß durch den entsprechend erhöhten Innendruck das Überdruckventil (12) ausgelöst wird.

2. Akkumulator nach Anspruch 1, dadurch gekennzeichnet, daß das Vlies (22, 10) im zweiten Freiraum zwischen den Seitenkanten der Elektrodenplatten (2, 3) und den Seitenwänden des Gehäuses (9) sowie wenigstens teilweise im oberen ersten Freiraum oberhalb der Elektrodenplatten (2, 3) bzw. oberhalb des verfestigten gelförmigen Elektrolyten oberhalb der Polbrücken (7, 8), bezogen auf eine stehende Anordnung des Akkumulators, angeordnet ist.

3. Akkumulator nach Anspruch 1 oder 2, dadurch gekennzeichnet, daß der Freiraum oberhalb der Elektrodenplatten (2, 3) durch Vorsehen zweier gegenüberliegender entsprechend verlängerter Vliesschichten (22) an den Seitenkanten der Elektrodenplatten geschaffen wird, die bis an den Gehäusedeckel (11) herangeführt und zur Mitte des oberen Freiraumes hin vorzugsweise ein- oder mehrfach gefaltet sind.

4. Akkumulator nach Anspruch 1 oder 2, dadurch gekennzeichnet, daß der größere obere Freiraum oberhalb der Elektrodenplatten bzw. oberhalb des verfestigten gelförmigen Elektrolyts im Anschluß an die Polbrücken (7, 8) durch eine oder mehrere entsprechend dünnere Vliesschichten (15) unter Freilassen des Bereiches des Überdruckventiles (12) ausgefüllt ist, wobei der freigelassene Raum vorzugsweise eine von der Basis des Überdruckventiles (12) zu den Elektrodenplatten hin verlaufende pyramidenförmige Verengung darstellt.

5. Akkumulator nach einem der Ansprüche 1 bis 4, gekennzeichnet durch eine Porosität des Vlieses von 90 bis 99%.

6. Akkumulator nach einem der Ansprüche 1 bis 5, dadurch gekennzeichnet, daß das Vlies durch eine als Avivage bezeichnete Nachbehandlung eine definierte anfängliche Benetzbarkeit erhält.

7. Akkumulator nach einem der Anprüche 1 bis 6, dadurch gekennzeichnet, daß das Vlies elastisch und im eingebauten Zustand auf eine reduzierte Dicke zwischen 90% und 10%, vorzugsweise 50 bis 80% der nicht gepreßten Dicke zusammengepreßt ist.

8. Akkumulator nach einem der Ansprüche 1 bis 7, gekennzeichnet durch einen Aufbau des Vlieses aus Wirrfasern einer Kunststoff- Faser, die mit einer Mantelschicht aus einem Kunststoff niedrigeren Schmelzpunktes umgeben ist, wobei durch Erhitzen während der Herstellung aneinander angrenzende Wirrfasern punktweise miteinander verschmolzen sind.

9. Akkumulator nach Anspruch 8, dadurch gekennzeichnet, daß als Kern- Kunststoff der Wirrfasern Polyester und als Mantel-Kunststoff mit niedrigerem Schmelzpunkt Polyäthylen eingesetzt ist, oder daß zwei verschiedene Polyäthylen- Typen eingesetzt sind.

## Claims

1. Gas-tight maintenance free high capacity lead accumulator comprising positive (2) and negative electrode plates (3) separated by separators (4) and containing the active masses, comprising an enlarged upper first free space formed between electrode plates (2, 3) and the case cover (11), further comprising a lateral second free space formed between the lateral edges of the electrode plates and the lateral walls, and comprising a lower third free space formed between the electrode plates and the bottom of the case (9), all related to an upward arrangement of the accumulator, comprising a filling hole (21) and a high-pressure relief valve (12), wherein said positive (2) and negative electrode plates (3) respectively being connected to each other via pole bridges (7, 8), respectively, are lead through the case cover (11) to the outwards by a positive terminal pole (5) and a negative terminal pole (6) respectively and in a sealed manner, wherein a thixotropic gel in which sulphuric acid is bound is filled in as electrolyte and to a level above the pole bridges (7, 8), and wherein collecting means are provided for collecting the free liquid and gaseous electrolyte during a lying arrangement of the accumulator,
characterized in that highly porous fleece (10, 22; 15, 14) consisting of glass, mineral or plastic fibers is provided at least partly in the upper first or the lateral second of the three free spaces as collecting means such that said fleece is capable to store the amount of the free liquid and possibly gaseous electrolyte temporarily which is present depending of the charging situation of the accumulator, and that said fleece is capable to release said stored electrolyte at changed charging conditions without releasing the high-pressure relief valve (12) because of a correspondingly increased internal pressure.

2. Accumulator according to claim 1 characterized in that the fleece (22, 10) is arranged within the second free space formed between the lateral edges of the electrode plates (2, 3) and the lateral walls of the case (9) and at least partly within the upper first free space above the electrode plates (2, 3) or above the solidified gel electrolyte above the pole bridges (7, 8) related to an upward arrangement of the accumulator.

3. Accumulator according to claim 1 or 2, characterized in that the free space above the electrode plates (2, 3) is formed by the arrangement of two opposite and accordingly elongated fleece sheets (22) at the lateral edges of the electroce plates which are lead to the case cover (11) and which are preferably folded towards the central portion of the upper free space once or more than once.

4. Accumulator according to claim 1 or 2 characterized in that the enlarged upper free space above the electrode plates or above the solidified gel electrolyte adjacent the pole bridges (7, 8) is filled by one ore more accordingly thinner fleece sheets (15) leaving free the area of the high-pressure relief valve (12) wherein the space left free is formed preferably as a pyramidal narrowing extending from the basis of the high-pressure relief valve (12) to the electrode plates.

5. Accumulator according to one of claims 1 to 4, characterized by a porosity of the fleece of 90 to 99 %.

6. Accumulator according to one of claims 1 to 5, characterized in that the fleece has an initial wettability which is definded by a finishing called avivage.

7. Accumulator according to one of claims 1 to 6, characterized in that the fleece is elastic and pressed to a reduced thickness between 90 % and 10 %, preferably 50 to 80 % of the not pressed thickness in built-in situation.

8. Accumulator according to one of claims 1 to 7, characterized by a construction of the fleece of tangled fibers of a plastics fiber which is coated by a coating layer of a plastics having a lower melting point wherein tangled fibers adjacent to each other are melted together during the manufacturing at some points.

9. Accumulator according to claim 8, characterized in that polyester is used as a core plastics of the tangled fibers and that polyethylene is used as coating plastics having a lower melting point, or that two different types of polyethylene are used.

## Revendications

1. Accumulateur à plomb de haute capacité étanche aux gaz et ne nécessitant pas d'entretien, comprenant des plaques-électrode positives (2) et négatives (3) contenant les masses actives et séparées par des séparateurs (4), avec un espace libre supérieur plus grand entre les plaques-électrode (2, 3) et le couvercle du boîtier (11), un second espace libre latéral entre les arêtes latérales des plaques-électrode et les parois latérales et un troisième espace libre inférieur entre les plaques-électrode et le fond du boîtier (9), ces indications se référant respectivement à la position debout de l'accumulateur, ainsi qu'une ouverture de remplissage (21) et une soupape de surpression (12), les plaques-électrode positives (2) et négatives (3) reliées entre elles par des pontets de connexion des pôles (7, 8) étant conduits vers l'extérieur sur un pôle de raccordement positif (5) et négatif (6) étanchés à travers le couvercle du boîtier (11), un gel thixotrope dans lequel est lié de l'acide sulfurique servant d'électrolyte étant rempli jusqu'au-dessus des pontets de connexion des pôles (7, 8), et des réceptacles étant prévus pour l'électrolyte liquide et gazeux libre en position couchée de l'accumulateur,
caractérisé en ce que les réceptacles contiennent au moins partiellement dans le premier espace libre supérieur ou dans le second espace libre latéral un matelas en fibres de verre, fibres minérales ou synthétiques (10, 22; 15, 14) d'une porosité telle qu'il puisse stocker l'électrolyte liquide ou le cas échéant gazeux libéré en fonction de la charge de l'accumulateur sans que l'augmentation de pression correspondante ne déclenche la soupape de surpression (12).

2. Accumulateur selon la revendication 1, caractérisé en ce que le matelas de fibres (22, 10) est disposé dans le second espace libre pratiqué entre les arêtes latérales des plaques-électrode (2, 3) et les parois latérales du boîtier (9) et au moins partiellement dans le premier espace libre supérieur au-dessus des plaques-électrode (2, 3) et/ou au-dessus de l'électrolyte en forme de gel solidifié au-dessus des pontets de connexion des pôles (7, 8), ces indications se référant à la position debout de l'accumulateur.

3. Accumulateur selon l'une des revendications 1 ou 2, caractérisé en ce que l'espace libre au-dessus des plaques-électrode (2, 3) est pratiqué en prévoyant sur les arêtes des plaques-électrode deux couches de fibres (22) disposées en face l'une de l'autre et prolongées de façon correspondante jusqu'au couvercle du boîtier (11) et de préférence pliées une ou plusieurs fois jusqu'au milieu de l'espace libre supérieur.

4. Accumulateur selon l'une des revendications 1 ou 2, caractérisé en ce que l'espace libre supérieur le plus grand pratiqué au-dessus des plaques-électrode et/ou au-dessus de l'électrolyte en forme de gel solidifié disposé au-dessus des pontets de connexion des pôles (7, 8) est rempli d'une ou plusieurs couches de fibres (15) d'une épaisseur plus mince en laissant toutefois libre la zone de la soupape de surpression (12), la zone laissée libre ayant de préférence la forme d'un goulot pyramidal dont la base part de la soupape de surpression (12) vers les plaques-électrode.

5. Accumulateur selon l'une des revendications 1 à 4, caractérisé par une porosité des matelas de fibres allant de 90 à 99%.

6. Accumulateur selon l'une des revendications 1 à 5, caractérisé en ce que les fibres sont dotées d'une imprégnabilité de départ donnée au moyen d'un traitement qualifié d'avivage.

7. Accumulateur selon l'une des revendications 1 à 6, caractérisé en ce que les matelas de fibres sont élastiques et peuvent être comprimées pour atteindre une épaisseur comprise entre 90 et 10%, de préférence entre 50 et 80% de l'épaisseur non comprimée.

8. Accumulateur selon l'une des revendications 1 à 7, caractérisé par une structure des matelas en fibres synthétiques embrouillées entourée d'une chemise en matière plastique à point de fusion bas, les fibres embrouillées voisines étant fusionnées l'une avec l'autre point par point par échauffement pendant la fabrication.

9. Accumulateur selon la revendication 8, caractérisé en ce que l'on utilise du polyester en tant que matière plastique de base pour les fibres embrouillées et du polyéthylène en tant que matière plastique à point de fusion bas pour la chemise, ou que l'on utilise deux types de polyéthylène différents.
